# EUROPÄISCHE PATENTSCHRIFT

(11) **EP 0 504 631 B1**
(45) Veröffentlichungstag und Bekanntmachung des Hinweises auf die Patenterteilung: **03.02.1999**
(21) Anmeldenummer: 92103227.2
(22) Anmeldetag: 26.02.1992
(51) Int. Cl.: F16K 27/02, F16K 15/04

(54) **Rückschlagventil**
Non-return valve
Clapet antiretour

(30) Priorität: 18.03.1991 DE 4108790
(43) Veröffentlichungstag der Anmeldung: 23.09.1992
(73) Patentinhaber: GEORG FISCHER AKTIENGESELLSCHAFT, CH-8201 Schaffhausen (CH)
(72) Erfinder: Hiltebrand, Eduard, CH-8200 Schaffhausen (CH)
(74) Vertreter: Rottmann, Maximilian R.

(56) Entgegenhaltungen:
- EP-A- 0 315 797
- DE-A- 2 728 486
- DE-A- 3 003 480
- GB-A- 2 176 267

## Beschreibung

Die Erfindung betrifft ein Rückschlagventil, wie es im Oberbegriff von Anspruch 1 gekennzeichnet ist.

Nachteilig bei Rückschlagventilen früherer Bauart ist, dass beim Öffnen des Rückschlagventils sofort ein grosser Durchflussquerschnitt entsteht, so dass bei etwas grösseren Strömungsgeschwindigkeiten des Mediums Turbulenzen und Vibrationen auftreten, durch welche der kugelige Verschlusskörper hin- und hergeschlagen wird. Dabei entstehen Abnützungen und Materialausbrüche am Verschlusskörper, wodurch auf die Dauer keine einwandfreie Dichtwirkung in Schliess-Stellung gewährleistet ist. Auch an den Anschlagflächen und Führungsrippen für den Verschlusskörper entstehen Abnützungen. Die abgenützten bzw. ausgeschlagenen Materialteile verunreinigen das Medium und können zu weiteren Schäden an anderen, im Rohrleitungssystem angeordneten Ventilen, Pumpen und anderen Armaturen führen.

Ein Rückschlagventil der eingangs genannten Art ist aus der EP-A-0 315 797 bekannt. Auch die DE-A-27 28 486 offenbart ein Rückschlagventil mit einem entsprechenden Ringteil, dessen Innenbohrung mit dem Kugeläquator des an der Dichtung anliegenden Kugel-Verschlusskörpers einen engen Spalt bildet. Mit den beiden vorbekannten Rückschlagventilen ist es jedoch bisher nicht gelungen, den nachteiligen Einfluss äusserer Schwingungen auf die sichere Abdichtung des Rückschlagventils zu verhindern.

Aufgabe der vorliegenden Erfindung ist die Schaffung eines Rückschlagventils der eingangs genannten Art, bei welchem auch bei unterschiedlichen Durchflussgeschwindigkeiten Turbulenzen und somit Schläge des Verschlusskörpers und dessen Beschädigung weiter vermindert werden.

Erfindungsgemäss wird diese Aufgabe durch die kennzeichnenden Merkmale von Anspruch 1 gelöst.

Besonders vorteilhafte Ausgestaltungen der Erfindung sind in den abhängigen Ansprüchen gekennzeichnet.

Durch die erfindungsgemässe Anordnung und Ausbildung eines Ringteils anschliessend an die Dichtung wird der Kugel-Verschlusskörper durch den im Ringteil kurz nach dem öffnen ringförmigen Strahl in zentrischer Lage beschleunigt und ohne grösseres Ausweichen bis zum Anschlag bewegt, so dass ein Schlagen des Kugel-Verschlusskörpers sowie Vibrationen verhindert werden.

Dadurch werden Beschädigungen am Ventil und Partikel im Medium vermieden, wodurch eine dauerhafte Betriebssicherheit des Ventils gewährleistet wird.

Es hat sich gezeigt, dass bei niedrigen als auch bei höheren als bisher üblichen Durchflussgeschwindigkeiten der Kugel-Verschlusskörper ohne Vibration an der Anschlagfläche zum Anliegen kommt.

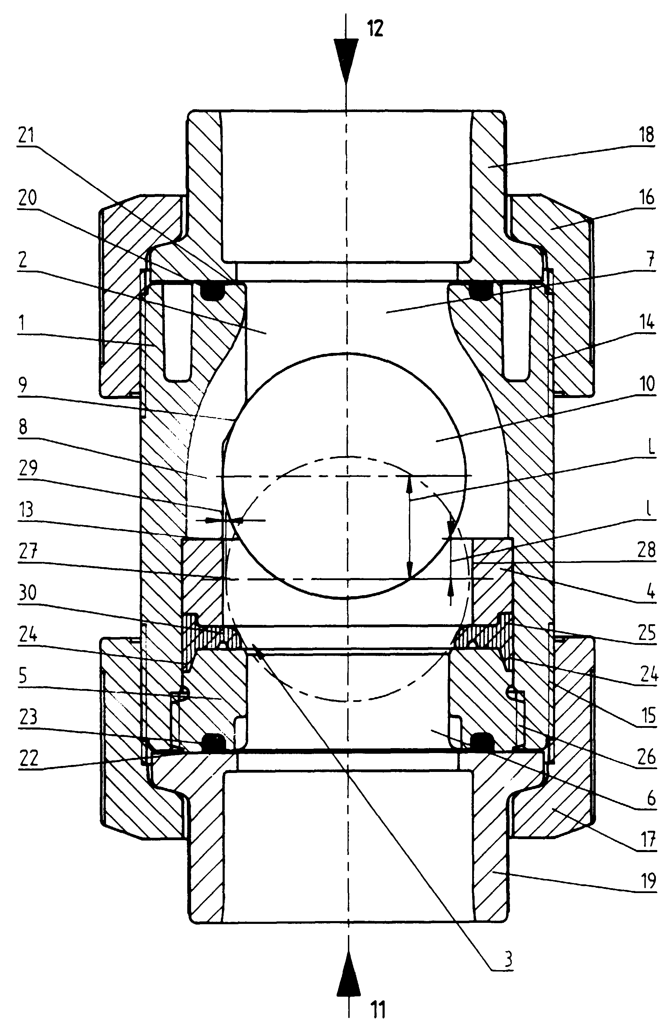

Die Erfindung ist in der beiliegenden Zeichnung beispielsweise dargestellt und nachfolgend beschrieben. Die einzige Figur zeigt einen Längsschnitt eines Rückschlagventils.

Das dargestellt Rückschlagventil weist ein Ventilgehäuse 1 mit einem Durchflusskanal 2 auf.

An einer Seite des Durchflusskanals 2 ist eine Dichtpartie 3 mit einer Dichtung 30 angeordnet, welche zwischen einem Ringteil 4 und einem Druckring 5 fest eingespannt ist. Der Druckring 5 weist eine Eintrittsöffnung 6 für das Medium auf, welche vorzugsweise den gleichen Querschnitt aufweist, wie die auf dem gegenüberliegenden Ende des Gehäuses 1 angeordnete Austritts-Öffnung 7 des Durchflusskanals 2.

Im Durchflusskanal 2 sind am Innenumfang vorzugsweise drei Führungsrippen 8 gleichmässig verteilt angeordnet, welche eine Anschlagfläche 9 aufweisen. Zwischen den Führungsrippen 8 ist ein als Kugel ausgebildeter Verschlusskörper 10 verschiebbar und geführt angeordnet, welcher beim normalen Mediendurchfluss in Richtung des Pfeiles 11 an den Anschlagflächen 9 anliegt. Bei einem Rückfluss des Mediums gemäss Pfeil 12 wird der Verschlusskörper 10 durch den Mediendruck gegen die Dichtung 30 gedrückt, so dass der Rückfluss gesperrt wird. Die Führungsrippen 8 weisen eine Stirnfläche 13 auf, an welcher das Ringteil 4 anliegt.

Die Innenkontur des Durchflusskanals 2 ist in Richtung der Austrittsöffnung 7 strömungsgünstig ausgebildet.

Das Ventilgehäuse 1 ist an beiden Enden mit Aussengewinden 14, 15 versehen, auf welche Bundmuttern 16, 17 aufschraubbar sind.

Mittels der Bundmutter 16 kann eine Bundbuchse 18 gegen die mit einer Dichtung 20 versehenen Endstirnflächen 21 des Ventilgehäuses 1 gedrückt und am Ventilgehäuse 1 dichtend befestigt werden.

Mit der Bundmutter 17 wird eine Bundbuchse 19 gegen eine mit einer Dichtung 23 versehenen Endstirnfläche 22 des Druckringes 5 gedrückt.

Der Druckring 5 ist in ein Innengewinde 26 des Gehäuses 1 direkt eingeschraubt, wodurch das Ringteil 4 über die Dichtung 30 gegen die Stirnfläche 13 gedrückt wird.

Die Teile des Rückschlagventils sind vorzugsweise aus einem Kunststoff wie z.B. Polyvinylchlorid hergestellt, wodurch es für aggressive Medien verwendbar ist. Selbstverständlich kann das Rückschlagventil auch aus anderen Materialien wie z.B. Stahl, Kupfer, Messing usw. hergestellt sein.

Die Dichtung 30 ist mit ihrem Aussendurchmesser im Gehäuse 1 zentriert angeordnet und zwischen dem Ringteil 4 und dem Druckring 5 gehalten. Hierbei greift je ein Ringwulst der Dichtung 30 in eine Ausnehmung 24 des Druckringes 5 und in eine Ausnehmung 25 des Ringteils 4 ein, wodurch die Dichtung 30 fest eingespannt ist.

Der Ringteil 4 weist eine vorzugsweise zylindrische Innenbohrung 28 auf, welche im Innendurchmesser 2/100 bis 5/100, vorzugsweise 2,5/100 bis 4,2/100 des Druchmessers des Kugel-Verschlusskörpers 10 grösser ist als der Durchmesser des Kugel-Verschlusskörpers 10, was einen Spalt 29 ergibt. Die Teil-Länge (1) der Innenbohrung 28 ist ausgehend von der Lage des Kugeläquators 27 in Schliess-Stellung (siehe strichpunktierte Lage des Kugel-Verschlusskörpers 10) in Richtung des Verschiebeweges bzw. der Durchflussrichtung gemäss Pfeil 11 ca. 1/7 bis 1/2 - vorzugsweise 1/6 bis 1/3 - des Durchmessers des Kugel-Verschlusskörpers 10. Vorzugsweise beträgt der Verschiebeweg (L) des Kugel-Verschlusskörpers 10 etwa 1/2 bis 4/5 - vorzugsweise 1/2 bis 3/4 des Durchmessers des Kugel-Verschlusskörpers 10.

Durch diese Ausbildung der Innenbohrung 28 des Ringteils 4 und die angeführte Massabhängigkeit vom Kugel-Verschluss-körper bzw.vom Verschiebeweg wird erreicht, dass beim Öffnen des Rückschlagventils der Kugel-Verschlusskörper 10 beschleunigt wird und durch einen, durch das Ringteil 4 entstehenden kreisringförmigen Mediumsstrahl zentrisch ohne Vibration und Hin- und Herschlagen an der Anschlagfläche 9 zum Anliegen kommt. Somit werden Beschädigungen des Kugel-Verschlusskörpers weitgehend vermieden und das Rückschlagventil kann auch für Strömungsgeschwindigkeiten des Durchflussmediums eingesetzt werden, die grösser als 2 m/sek. sind, wobei es sich gezeigt hat, dass auch bei niedrigen Durchflussgeschwindigkeiten von ca. 0,5 m/sek. der Kugel-Verschlusskörper 10 ohne Vibration an der Anschlagfläche 9 zum Anliegen kommt.

Der Spalt 29 ist dabei so gross, dass sich keine im Medium vorhandene Partikel festsetzen können bzw. diese werden beim vollständigen Öffnen des Rückschlagventils wieder herausgespült.

## Patentansprüche

1. Rückschlagventil mit einem in einem Durchflusskanal (2) eines Ventilgehäuses (1)angeordneten, durch das Durchflussmedium verschiebbaren und in Schliess-Stellung an einer Dichtpartie (3) mit einer elastischen Dichtung anliegenden Kugel-Verschlusskörpers (10), welcher durch im Durchflusskanal (2) angeordneten und Anschlagflächen (9) aufweisenden Führungsrippen (8) geführt ist, wobei in Durchflussrichtung (11) gesehen anschliessend an die Dichtpartie (3) ein Ringteil (4) angeordnet ist, dessen Innenbohrung (28) mit dem Kugeläquator (27) des an der Dichtung (30) anliegenden Kugel-Verschlusskörpers (10) einen engen Spalt (29) bildet, dadurch gekennzeichnet, dass die Teil-Länge (1) der Innenbohrung (28) des Ringteiles (4) ausgehend von der Lage des Kugeläquators (27) in Schliess-Stellung in Durchflussrichtung (11) 1/7 bis 1/2 des Durchmessers des Kugel-Verschlusskörpers (10) entspricht und die Innenbohrung (28) um 2/100 bis 5/100 des Durchmessers des Kugelverschlusskörpers (10) grösser ist als der Durchmessers des Kugelverschlusskörper.

2. Rückschlagventil nach Anspruch 1, dadurch gekennzeichnet, dass die Teil-Länge (1) 1/6 bis 1/3 des Durchmessers des Kugelverschlusskörpers (10) entspricht.

3. Rückschlagventil nach Anspruch 1 oder 2, dadurch gekennzeichnet, dass der Verschiebeweg (L) des Kugelverschlusskörpers (10) 1/2 bis 4/5 des Durchmessers des Kugelverschlusskörpres (10) entspricht.

4. Rückschlagventil nach einem der Ansprüche 1 bis 3,dadurch gekennzeichnet, dass das Ringteil (4) mittels eines in ein Innengewinde (26) des Gehäuses (1) einschraubbaren Druckringes (5) gegen eine Stirnfläche (13) des Gehäuses (1) drückbar ist.

## Claims

1. Non-return valve having a spherical sealing body (10) which is arranged in a flow channel (2) of a valve housing (1), can be displaced by the flow medium and, in the closed position, rests against a sealing part (3) having an elastic seal, and which is guided by guide ribs (8) which are arranged in the flow channel . (2) and have stopping faces (9), wherein, seen in the direction of flow (11), there is arranged so as to be adjoining the sealing part (3) an annular portion (4), the inside bore (28) of which forms a narrow gap (29) with the sphere equator (27) of the spherical sealing body (10) which rests against the seal (30), characterised in that the partial length (1) of the inside bore (28) of the annular portion (4), starting from the position of the sphere equator (27) in the closed position, in the direction of flow (11), corresponds to 1/7 to 1/2 of the diameter of the spherical sealing body (10) and the inside bore (28) is larger by 2/100 to 5/100 of the diameter of the spherical sealing body (10) than the diameter of the spherical sealing body.

2. Non-return valve according to claim 1, characterised in that the partial length (1) corresponds to 1/6 to 1/3 of the diameter of the spherical sealing body (10).

3. Non-return valve according to claim 1 or 2, characterised in that the displacement path (L) of the spherical sealing body (10) corresponds to 1/2 to 4/5 of the diameter of the spherical sealing body (10).

4. Non-return valve according to one of the claims 1 to 3, characterised in that the annular portion (4) can be pushed against an end face (13) of the housing (1) by means of a clamping ring (5) which can be screwed into an internal thread (26) of the housing (1).

## Revendications

1. Clapet antiretour, comprenant un obturateur sphérique (10) qui est disposé dans un conduit d'écoulement (2) d'un corps de clapet (1) et peut être déplacé sous l'action du fluide en circulation et qui prend appui, en position de fermeture, sur une partie d'étanchéité (3) comportant une garniture d'étanchéité élastique et est guidé par des nervures de guidage (8) disposées dans le conduit d'écoulement (2) et présentant des surfaces de butée (9), tandis qu'une pièce annulaire (4) est disposée d'une manière adjacente à la partie d'étanchéité (3) dans le sens d'écoulement (11), l'alésage intérieur (28) de la pièce annulaire (4) formant un intervalle (29) étroit avec le grand cercle de sphère (27) de l'obturateur sphérique (10) en appui sur la garniture d'étanchéité (30), caractérisé en ce que la longueur partielle (1) de l'alésage intérieur (28) de la pièce annulaire (4) à partir de la position du grand cercle de sphère (27) en position de fermeture et dans le sens d'écoulement (11) vaut 1/7 à 1/2 du diamètres de l'obturateur sphérique (10) et l'alésage intérieur (28) est plus grand, de 2/100 à 5/100 du diamètre de l'obturateur sphérique (10), que le diamètre de l'obturateur sphérique.

2. Clapet antiretour suivant la revendication 1, caractérisé en ce que la longueur partielle (1) vaut 1/6 à 1/3 du diamètre de l'obturateur sphérique (10).

3. Clapet antiretour suivant la revendication 1 ou 2, caractérisé en ce que la course (L) de l'obturateur sphérique (10) vaut 1/2 à 4/5 du diamètre de l'obturateur sphérique (10).

4. Clapet antiretour suivant l'une des revendications 1 à 3, caractérisé en ce que la pièce annulaire (4) peut être appliquée en appui sur une surface frontale (13) du corps (1) au moyen d'une bague de pression (5) pouvant être vissée dans un filetage intérieur (26) du corps (1).
